# EUROPEAN PATENT SPECIFICATION

(11) **EP 2 294 906 B1**
(45) Date of publication and mention of the grant of the patent: **31.10.2012**
(21) Application number: 10174026.4
(22) Date of filing: 25.08.2010
(51) Int. Cl.: A01B 45/02, A01B 33/02, A01D 34/10, A01D 34/47, A01D 34/68

(54) **An agricultural device**
Landwirtschaftliche Vorrichtung
Dispositif agricole

(30) Priority: 09.09.2009 IT RE20090088
(43) Date of publication of application: 16.03.2011
(73) Proprietor: Eurosystems S.p.A., 42045 Luzzara (Reggio Emilia) (IT)
(72) Inventor: Bovi, Fabio, 42045, LUZZARA (REGGIO EMILIA) (IT)
(74) Representative: Corradini, Corrado

(56) References cited:
- EP-A2- 1 055 358
- DE-A1- 3 715 350
- DE-A1- 3 836 727
- DE-A1- 10 050 372
- DE-A1- 19 832 957
- US-A- 4 550 783
- US-A1- 2003 178 207
- US-B1- 6 708 773

## Description

The invention relates to the motor-driven agricultural devices which are commonly used in gardening.

In particular, the invention relates to machines known as scarifiers.

Scarifiers are agricultural gardening tools which are used for the breaking-up of the superficial layer of soil and/or the elimination of those layers of moss or of matted grass that can form on the soil, in order to help the aeration and the absorption of water.

A scarifier generally comprises a frame equipped with wheels in order to move on the ground and bar handles which can be held by a walking user for pushing and driving the moving tool.

A scarifying tool, generally comprising a rotating shaft upon which are fitted a plurality of prongs or radially-developing steel blades, is fitted on the frame. The rotating shaft is horizontally orientated, so that the radial prongs can rotate touching the soil and thus carry out the scarification.

The scarifying tool is generally set in motion by a horizontal-shaft motor, which is fitted on the frame and connected to the tool via a simple belt or chain transmission.

Despite the structural simplicity, within the production of a complete range of agricultural gardening tools, the manufacturing of the scarifying tools is rather expensive due to the need to buy the above-mentioned horizontal-shaft motors.

The majority of agricultural gardening tools are equipped with small internal-combustion engines which have to be mounted on the tool frame such that the drive shaft is vertically orientated.

These engines cannot be mounted with a horizontal shaft, both for reasons of overall size and above all for functional reasons, since a wrong mounting position could cause the malfunctioning of the engine itself.

It follows that the manufacturing of scarifiers requires the purchase of small batches of horizontal shaft motors which are only used on this type of machine with no possibility of achieving economy of scale and thus with costs proportionally higher than those of other tools.

In particular, DE 37 15 350 discloses an agricultural device as defined in the preamble of claim 1.

The aim of the invention is to reduce the manufacturing costs of agricultural gardening tools such as scarifiers.

Further aim of the invention is to attain the above-mentioned objective in the ambit of a simple, rational and relatively inexpensive solution.

The aims are attained by the characteristics of the invention recited in the first independent claim. The dependent claims illustrate preferred and/or particularly advantageous aspects of the invention.

In particular the invention comprises an agricultural device comprising a frame which can be moved and driven on the soil by a walking user, and a rotary tool mounted on the frame with a horizontal axis of rotation, a motor drive (4) is fitted on the frame, which motor drive exhibits a vertical-axis drive shaft, which drive shaft is connected to the rotary tool via a transmission belt ring-wound around a drive pulley coaxially fitted on the drive shaft, a driven pulley coaxially fitted on the rotary tool, and at least a pair of return pulleys having a rotation axis which is perpendicular both to the pulley of the drive shaft and to the pulley of the rotary tool, which pulleys deviate the route of the transmission belt from a plane where it winds around the drive pulley to a plane where it winds around the driven pulley.

According to the invention the return pulleys are rotatingly coupled to a belt-stretching body, which is mounted on the frame such as to be able to move between a non-active position, in which the transmission belt is loose, and an active position in which the transmission belt is tensioned.

Thanks to this solution, scarifiers can be manufactured with the same engines that are normally fitted onto all agricultural gardening tools; in this way advantageous economy of scale can be achieved and, consequently, an overall reduction of the production costs.

Further, the belt transmission which connects the motor to the device does not particularly complicate the scarifier, which remains simple and relatively inexpensive to manufacture.

Further characteristics and advantages of the invention will emerge from the detailed description that follows, illustrated in the figures of the accompanying tables of drawings, given by way of non-limiting example.
Figure 1 illustrates a scarifier in a lateral view according to the invention.
Figure 2 is section II-II of figure 1.
Figure 3 is an enlarged detail of figure 2 to which the scheme of the tensioning system of the transmission belt has been added.
Figure 4 is figure 3 illustrated when the transmission belt is tensioned.
Figure 5 is a detail of section V-V of Figure 4 .
Figure 6 is a view indicated by arrow VI in Figure 5.

Generally speaking, scarifier 1 is an agricultural gardening tool which is used for the breaking-up of the superficial layer of soil and/or the elimination of those layers of moss or of matted grass that can form on the soil, in order to help the aeration and the absorption of water of the terrain.

Scarifier 1 comprises a frame which is globally indicated with 2 in the figures. The frame 2 comprises a plane 20 fitted with wheels 21 which enable it to move on the ground and two bars 22 which from the plane 20 develop upwards and towards the back of the scarifier 1.

The upper ends of the bars 22 are joined together by a shaped crossbar 23. The crossbar 23 provides a handgrip which can be held by a walking user for pushing and guiding the scarifier 1 on the ground.

The bars 22 are adjustable lengthwise.

A scarifying tool 3 comprising a rotating shaft 30 onto which a plurality of prongs or radially-developing steel points 31 are fitted, is mounted below the plane 20.

The rotation axis of the rotating shaft 30 is horizontal and is transversally orientated with respect to the advancement direction of the scarifier 1.

In this way, the tips of the steel points 31 can touch the superficial layer of the ground and, thanks to the rotation of the rotating shaft 30, carry out the scarifying.

A container 24 for gathering the scraps of grass or of soil shattered by the steel points 31 and cast backwards by the rotation of the scarifying tool 3 is fitted to the back of the frame 2.

The rotation of the scarifying tool 3 is activated by a small internal-combustion engine 4 fitted on the plane 20.

The motor drive 4 is held in place above the plane 20 by three small supporting posts 25.

The motor drive 4 is of the vertical-shaft type and is therefore mounted such that its drive shaft 40 has a vertical axis and is positioned below, in the space defined by the small supporting posts 25.

The drive shaft 40 is connected to the scarifying tool 3 via a transmission belt 5, preferably of the trapezoid type which develops in a closed route defined by a plurality of pulleys.

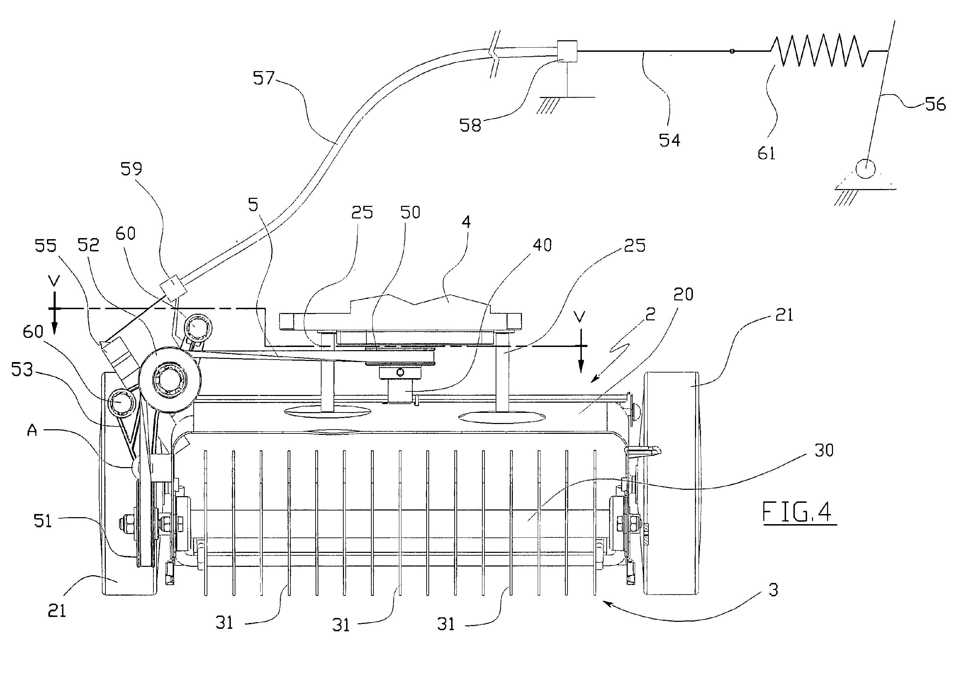

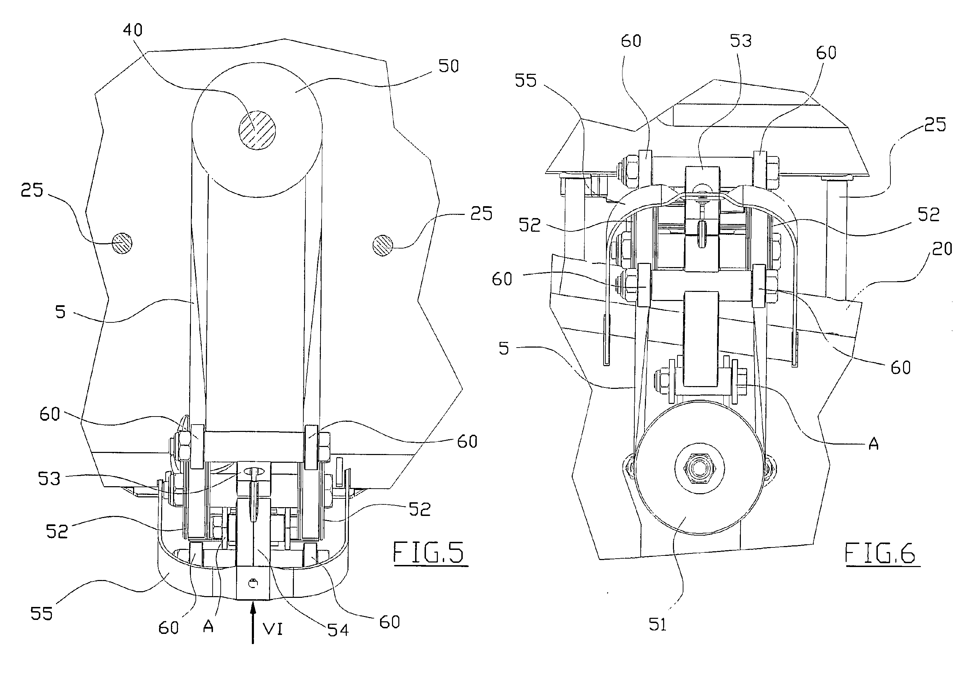

As Figures 4 and 6 better illustrate, a drive pulley 50 coaxially fitted onto the drive shaft 40, a driven pulley 51 coaxially fitted to one end of the rotating shaft 30 of the scarifying tool 3, and two reciprocally coaxial identical return pulleys 52 with a rotation axis which is perpendicular both to the axis of the drive shaft 40 and to the axis of the scarifying tool 3 are provided.

The return pulleys 52 are positioned vertically above the driven pulley 51 and horizontally next to the drive pulley 50.

In this way, the transmission belt 5 winds around the drive pulley 50, developing along a substantially horizontal plane, then moves on the first return pulley 52 which deviates it downwards so that it winds around the driven pulley 51 developing along a substantially vertical plane and finally it moves on the second return pulley 52 which deviates it again towards the drive pulley 50.

Upstream and downstream of each return pulley 52 the transmission belt 5 twists around itself.

This twisting is necessary for enabling the transmission belt 5 to engage in the groove of the return pulley 52 and, from that, into the grooves of the drive pulley 50 and of the driven pulley 51 respectively.

The return pulleys 52 are fitted idle on a belt-stretching lever 53, which is pivoted in A to the plane 20 of the frame 2 according to a rotation axis parallel to but separate from that of the return pulleys 52.

In particular, the rotation axis of the belt-stretching lever 53 is positioned at a height which is comprised between the rotation axis of the scarifying tool 3 and the rotation axis of the return pulleys 52.

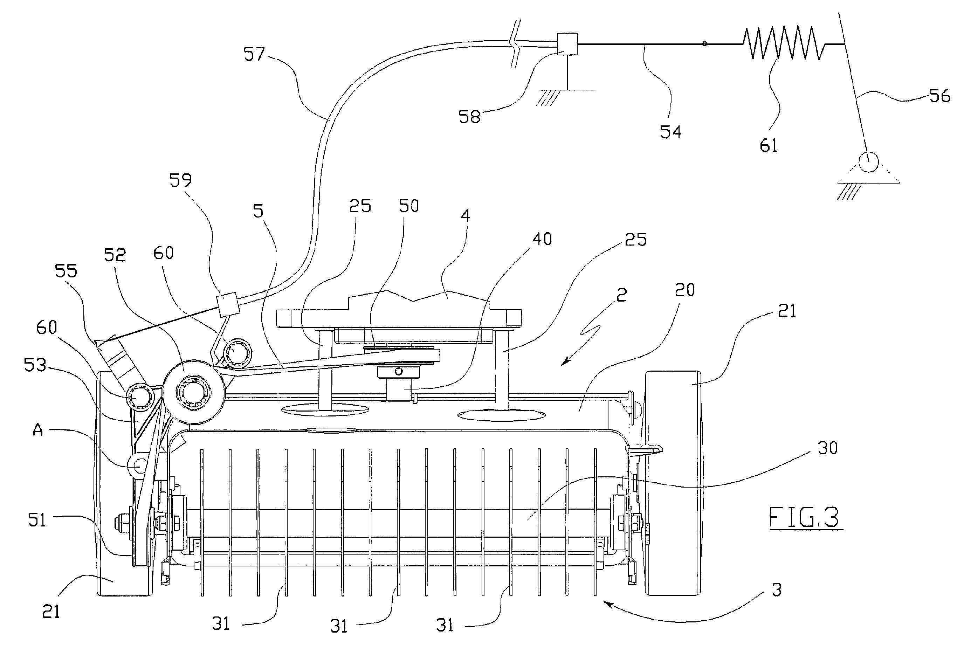

In this way, the belt-stretching lever 53 can oscillate between the non-active position of figure 3, where the return pulleys 52 are closer to the drive shaft 40 such that the transmission belt 5 is substantially loose, and the active position of figure 4, where the return pulleys 52 are further away from the drive shaft 40 in order to tighten the transmission belt 5, and vice versa.

The shifting of the belt-stretching lever 53 from the non-active to the active position is achieved through a flexible steel cable 54 one end of which is fitted onto a clamp 55 welded to the plane 20 in proximity of the belt-stretching lever 53, and the opposite end is fitted onto a control lever 56 which is pivoted to the bars 22 in proximity of the crossbar 23 grip.

The steel cable 54 is fitted inside an adequately rigid sheath 57, one end of which is fitted to the belt-stretching lever 53 while the opposite end is fitted to the frame 2, in this case to a supporting block 58 which is fitted to one of the bars 22.

Although in figures 3 and 4 the point of anchoring of the sheath 57 with the belt-stretching lever 53 is schematically illustrated by a block 59, in reality the end of the sheath 57 is anchored in a seating that is directly afforded in the body of the belt-stretching lever 53.

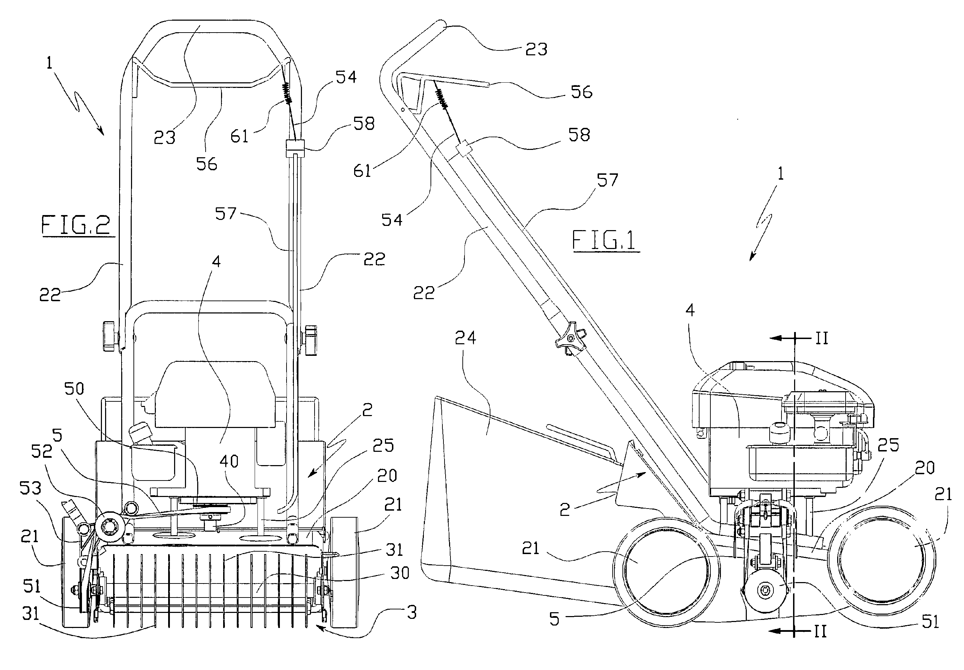

When the belt-stretching lever 53 is in the non-active position of figure 3 the steel cable 54 is loose and the control lever 56 is in the position illustrated in figure 1.

When the user pulls the control lever 56 towards the crossbar 23 the steel cable 54 tightens, so that, by reaction, the sheath 57 pushes the belt-stretching lever 53 into the active position of figure 4, thus tightening the transmission belt 5.

When the user releases the control lever 56 the tension of the transmission belt 5 brings the belt-stretching lever 53 back into the non-active position of figure 3.

Two casters 60 are further connected to each return pulley 52, which two casters 60 are rotatably mounted on the belt-stretching lever 53 and which are in contact with the transmission belt 5 when the belt-stretching lever 53 is in the non-active position of figure 3, such that the transmission belt 5 is constrained to remain wound around the return pulleys 52.

In this way, as the transmission belt 5 is somewhat rigid, it is obliged to perform a small rigid movement towards the drive shaft 40, thanks to which it distances and slightly detaches from the back of the drive pulley 50, as figure 3 illustrates.

This detachment prevents the drive pulley 50 from drawing the transmission belt 5 and, in this way, it prevents the movement of the drive shaft 40 from transmitting to the scarifying tool 3 although the motor 4 is working.

In practice, when the belt-stretching lever 53 is in the position of figure 3 the transmission is in an idle configuration where the drive shaft 40 idles and the scarifying tool 3 remains stationary.

When the belt-stretching lever 53 is tightened into the position of figure 4 the transmission belt 5 adheres to the drive pulley 50 and transmits the rotation to the scarifying tool 3.

As figures 3 and 4 show, the steel cable 54 is fixed to the control lever 56 by the interposing of a helical traction spring 61.

In practice, the helical traction spring 61 is connected in series to the steel cable 54, in order to connect the clamp 55 to the control lever 56.

Therefore, when the control lever 56 is set in motion to pull the steel cable 54 and tighten the transmission belt 5, the traction spring 61 extends slightly and applies an elastic force in the opposite direction.

In this way, the traction spring 61 tends to bring the belt-stretching lever 53 back into the position of figure 3 each time the user releases the control lever 56 while enabling recovery of the inelastic elongation to which the transmission belt 5 can be subjected due to the wear and tear of prolonged use.

Obviously, experts in the sector can apply various changes of a technical-application nature to the scarifier 1 as described above without forsaking the ambit of the invention as set out in following claims.

## Claims

1. An agricultural device comprising a frame (2) which can be moved and driven on the soil by a walking user, and a rotary tool (3) mounted on the frame (2) with a horizontal axis of rotation, a motor drive (4) is fitted on the frame (2), which motor drive (4) exhibits a vertical-axis drive shaft (40), which drive shaft (40) is connected to the rotary tool (3) via a transmission belt (5) ring-wound around a drive pulley (50) coaxially fitted on the drive shaft (40), a driven pulley (51) coaxially fitted on the rotary tool (3), and at least a pair of return pulleys (52) having a rotation axis which is perpendicular both to the pulley (50) of the drive shaft (40) and to the pulley (51) of the rotary tool (3), which pulleys (50, 51) deviate the route of the transmission belt (5) from a plane where it winds around the drive pulley (50) to a plane where it winds around the driven pulley (51) **characterised in that** the return pulleys (52) are rotatingly coupled to a belt-stretching body (53), which is mounted on the frame (2) such as to be able to move between a non-active position, in which the transmission belt (5) is loose, and an active position in which the transmission belt (5) is tensioned.

2. The device of claim 1, **characterised in that** the belt-stretching body (53) is configured such that when the chain-stretching body (53) is in a non-active position the transmission belt (5) cannot transmit motion to the drive pulley (50) and the driven pulley (51).

3. The device of claim 1, **characterised in that** means (60) for maintaining the transmission belt (5) at least partially wound around the return pulleys (52) are mounted on the belt-stretching body (53), even when the belt-stretching body (53) is in a non-active position.

4. The device of claim 1, **characterised in that** the belt-stretching body (53) is a lever pivoted to the frame (2) such as to oscillate between the non-active position and the active position about an axis that is parallel to the axis of the return pulleys (52).

5. The device of claim 1, **characterised in that** it comprises a command organ (56) to which a cable (54) is connected, which cable (54) can be pulled by manually activating the command organ (56) in order to move the belt-stretching body (53) into the active position.

6. The device of claim 5, **characterised in that** the command organ (56) is a lever pivoted to a fixed point in relation to the frame (2).

7. The device of claim 5, **characterised in that** the cable (54) has an end fixed to the command organ (56) and an opposite end fixed to the frame (2), and is inserted inside a sheath (57), which sheath (57) has an end fixed to the frame (2) and an opposite end fixed to the belt-stretching lever (53), such that the sheath (57) can push the belt-stretching body (53) towards the active position in response to a pulling of the cable (54).

8. The device of claim 5, **characterised in that** the cable (54) is connected in series to a traction spring (61).

9. The device of claim 1, **characterised in that** the rotary tool (3) is a scarifying tool.

## Patentansprüche

1. Landwirtschaftsgerät, einen Rahmen (2) umfassend, der auf dem Boden durch einen gehenden Benutzer bewegt und angetrieben werden kann, ein sich drehendes Werkzeug (3) mit horizontaler Rotationsachse, das an den Rahmen (2) montiert ist, einen Antriebsmotor (4), der an dem Rahmen (2) angebracht ist, wobei der Antriebsmotor (4) eine Antriebswelle (40) mit vertikaler Achse aufweist, wobei die Antriebswelle (40) am sich drehenden Werkzeug (3) mittels eines Transmissionsriemens (5) angeschlossen ist, der um eine Antriebsscheibe (50) gewunden ist, die koaxial auf der Antriebswelle (40) angebracht ist, eine angetriebene Scheibe (51), die koaxial auf dem sich drehenden Werkzeug (3) angebracht ist, und mindestens ein Paar Umlenkrollen (52) mit einer Rotationsachse, die senkrecht sowohl zur Scheibe (50) der Antriebswelle (40) als auch zur Scheibe (51) des sich drehenden Werkzeugs (3) liegt, wobei die Scheiben (50, 51) den Lauf des Transmissionsriemens (5) von einer Ebene, in der er sich um die Antriebsscheibe (50) windet, zu einer Ebene ablenken, in der er sich um die angetriebene Scheibe (51) windet, **dadurch gekennzeichnet, dass** die Umlenkrollen (52) drehbar mit einem den Riemen streckenden Körper (43) gekoppelt sind, der derart an den Rahmen (3) montiert ist, dass er sich zwischen einer nicht aktiven Position, in der der Transmissionsriemen (5) locker ist, und einer aktiven Position, in der der Transmissionsriemen (5) gespannt ist, bewegen können.

2. Gerät nach Anspruch 1, **dadurch gekennzeichnet, dass** der den Riemen streckende Körper (53) derart gestaltet ist, dass der Transmissionsriemen (5) keine Bewegung zur Antriebsscheibe (50) und zur angetriebenen Scheibe (51) übertragen kann, wenn sich der den Riemen streckende Körper (53) in einer nicht aktiven Position befindet.

3. Gerät nach Anspruch 1, **dadurch gekennzeichnet, dass** an den den Riemen streckenden Körper (53) Mittel (60) montiert sind, um den Transmissionsriemen (5) zumindest teilweise um die Umlenkrollen (52) gewunden zu halten, selbst wenn sich der den Riemen streckende Körper (53) in einer nicht aktiven Position befindet.

4. Gerät nach Anspruch 1, **dadurch gekennzeichnet, dass** der den Riemen streckende Körper (53) ein Hebel ist, der derart drehbar am Rahmen (2) befestigt ist, dass er zwischen der nicht aktiven Position und der aktiven Position um eine Achse schwenken kann, die parallel zur Achse der Umlenkrollen (52) liegt.

5. Gerät nach Anspruch 1, **dadurch gekennzeichnet, dass** es ein Befehlsorgan (56) umfasst, an das ein Kabel (54) angeschlossen ist, wobei das Kabel (54) durch manuelles Aktivieren des Befehlsorgans (56) gezogen werden kann, um den den Riemen streckenden Körper (53) in die aktive Position zu bewegen.

6. Gerät nach Anspruch 5, **dadurch gekennzeichnet, dass** das Befehlsorgan (56) ein Hebel ist, der im Verhältnis zum Rahmen (2) drehbar an einem festen Punkt angebracht ist.

7. Gerät nach Anspruch 5, **dadurch gekennzeichnet, dass** das Kabel (54) mit einem Ende am Befehlsorgan (56) befestigt ist und mit einem entgegengesetztem Ende am Rahmen (2) befestigt ist und es in eine Hülle (57) eingelegt ist, wobei die Hülle (57) mit einem Ende am Rahmen (2) befestigt ist und mit einem entgegengesetzten Ende am den Riemen streckenden Hebel (53) befestigt ist, so dass die Hülle (57) den den Riemen streckenden Körper (53) in Reaktion auf ein Ziehen des Kabels (54) hin zur aktiven Position drücken kann.

8. Gerät nach Anspruch 5, **dadurch gekennzeichnet, dass** das Kabel (54) in Reihe an eine Zugfeder (61) angeschlossen ist.

9. Gerät nach Anspruch 1, **dadurch gekennzeichnet, dass** das sich drehende Werkzeug (3) ein Fräswerkzeug ist.

## Revendications

1. Dispositif agricole comprenant un châssis (2) qui peut être déplacé et conduit sur le sol par un utilisateur en marchant, et un outil rotatif (3) monté sur le châssis (2) ayant un axe de rotation horizontal, dans lequel un entraînement à moteur (4) est monté sur le châssis (2), ledit entraînement à moteur (4) comportant un arbre d'entraînement à axe vertical (40), ledit arbre d'entraînement (40) étant connecté à l'outil rotatif (3) via une courroie de transmission (5) enroulée en boucle autour d'une poulie d'entraînement (50) montée coaxialement sur l'arbre d'entraînement (40), d'une poulie entraînée (51) agencée coaxialement sur l'outil rotatif (3), et d'au moins une paire de poulies de retour (52) ayant un axe de rotation perpendiculaire aussi bien à la poulie (50) de l'arbre d'entraînement (40) qu'à la poulie (51) de l'outil rotatif (3), lesdites poulies (50, 51) déviant la course de la courroie de transmission (5) d'un plan où elle s'enroule autour de la poulie d'entraînement (50) vers un plan où elle s'enroule autour de la poulie entraînée (51), **caractérisé en ce que** les poulies de retour (52) sont accouplées en rotation à un corps de tension de courroie (53) qui est monté sur le châssis (2) de manière à pouvoir se déplacer entre une position non active dans laquelle la courroie de transmission (5) est détendue et une position active dans laquelle la courroie de transmission (5) est tendue.

2. Dispositif selon la revendication 1, **caractérisé en ce que** le corps de tension de courroie (53) est configuré de telle sorte que, lorsque le corps de tension de courroie (53) est en position non active, la courroie de transmission (5) ne peut pas transmettre de mouvement à la poulie d'entraînement (50) et à la poulie entraînée (51).

3. Dispositif selon la revendication 1, **caractérisé en ce que** des moyens (60) pour maintenir la courroie de transmission (5) au moins partiellement enroulée autour des poulies de retour (52) sont montés sur le corps de tension de courroie (53), même lorsque le corps de tension de courroie (53) est en position non active.

4. Dispositif selon la revendication 1, **caractérisé en ce que** le corps de tension de courroie (53) est un levier pivotant sur le châssis (2) de manière à osciller entre la position non active et la position active autour d'un axe parallèle à l'axe des poulies de retour (52).

5. Dispositif selon la revendication 1, **caractérisé en ce qu'**il comprend un organe de commande (56) auquel un câble (54) est connecté, ledit câble (54) pouvant être tiré en actionnant manuellement l'organe de commande (56) de manière à déplacer le corps de tension de courroie (53) dans la position active.

6. Dispositif selon la revendication 5, **caractérisé en ce que** l'organe de commande (56) est un levier pivotant autour d'un point fixe par rapport au châssis (2).

7. Dispositif selon la revendication 5, **caractérisé en ce que** le câble (54) comporte une extrémité fixée à l'organe de commande (56) et une extrémité opposée fixée au châssis (2), et est inséré dans une gaine (57), ladite gaine (57) ayant une extrémité fixée au châssis (2) et une extrémité opposée fixée au levier de tension de courroie (53), de telle sorte que la gaine (57) peut pousser le corps de tension de courroie (53) vers la position active en réponse à une traction sur le câble (54).

8. Dispositif selon la revendication 5, **caractérisé en ce que** le câble (54) est connecté en série à un ressort de traction (61).

9. Dispositif selon la revendication 1, **caractérisé en ce que** l'outil rotatif (3) est un outil scarificateur.
